# EUROPÄISCHE PATENTSCHRIFT

(11) **EP 4 204 343 B1**
(45) Veröffentlichungstag und Bekanntmachung des Hinweises auf die Patenterteilung: **07.10.2026**
(21) Anmeldenummer: 21762737.1
(22) Anmeldetag: 25.08.2021
(51) Int. Cl.: B65G 47/86, B65B 35/16

(54) **VORRICHTUNG ZUM TRANSPORT VON BEHÄLTERN**
DEVICE FOR TRANSPORTING CONTAINERS
DISPOSITIF POUR TRANSPORTER DES CONTENANTS

(30) Priorität: 26.08.2020 DE 102020122313
(43) Veröffentlichungstag der Anmeldung: 05.07.2023
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2021/073443
(87) Internationale Veröffentlichungsnummer: WO 2022/043354

(56) Entgegenhaltungen:
- CN-U- 208 898 481
- DE-A1- 102017 100 521
- DE-A1- 102018 104 112

## Beschreibung

Die Erfindung betrifft eine Vorrichtung und ein Verfahren zum Transport von Behältern, umfassend eine Behälterklammer mit zwei Greifarmen zum Greifen von im Querschnitt runden Behältertypen mit unterschiedlichem Behälterradius.

Transportvorrichtungen mit Behälterklammern zum Erfassen von Behältern sind insbesondere als Transportsterne ausgebildet, die die Behälter entlang eines Kreisbahnabschnittes, einem sogenannten Teilkreis, transportieren. Dabei sind eine Vielzahl von Behälterklammern nebeneinander an einem Tragkörper angeordnet, der um eine zentrale Drehachse gedreht wird. Beim Transport entlang des Teilkreises ist häufig eine hohe Präzision erforderlich, beispielsweise wenn die Behälter entlang des Teilkreises eine Behandlung erfahren oder im Übergabebereich zwischen zwei Transportsternen. Behälterbehandlungsvorrichtungen können beispielsweise Reinigungsvorrichtungen oder auch Abfüllvorrichtungen sein.

Beim Erfassen der Behälter mit den bekannten Behälterklammern tritt das Problem auf, dass immer nur Behälter mit einem ganz spezifischen Durchmesser in einer Mittellage, in der die mittlere Längsachse des Behälters exakt entlang des Teilkreises bewegt wird, transportiert werden. Behälter mit einem von dem spezifischen Durchmesser abweichenden Durchmesser erfahren beim Ergreifen durch die Greifarme eine Verschiebung in radialer Richtung nach innen oder außen. Daraus ergibt sich der Nachteil, dass die Behälter beispielsweise bei der Übergabe von Transportstern zu Transportstern einen Versatz erfahren, beim Abfüllen nicht exakt mit dem Füllerventil fluchten oder auch beim Verschließen nicht exakt mittig unter dem Verschließelement der Verschließvorrichtung stehen, was zu verschiedenen Problemen bei dem Transport der Behälter durch eine Behälterbehandlungsanlage führen kann.

Aus der Druckschrift DE 10 2017 100 521 A1, welche die Merkmale des Oberbegriffs des Anspruchs 1 offenbart, ist eine Behälterklammer zum Ergreifen eines Behälters im Bauchbereich bekannt geworden. Um eine Behälterklammer bereitzustellen, die Behälter mit besonders großem unterschiedlichen Behälterdurchmesser ergreifen kann und die besonders einfach reinigbar ist, ist vorgesehen, dass die Behälter eine Antriebswelle und zwei Führungsachsen und einen ersten und einen zweiten Greifarm aufweisen, wobei jeder Greifarm einen Greifabschnitt zum Erfassen des Behälters, einen Steuerabschnitt und ein zwischen dem Greifabschnitt und dem Steuerabschnitt angeordnetes erstes Lagerende und ein zweites Lagerende aufweist, das an einem dem ersten Lagerende am Steuerabschnitt gegenüberliegenden Ende des Steuerabschnittes angeordnet ist, wobei jeder Greifarm mittels eines ein erstes Lagerende und ein zweites Lagerende aufweisenden Führungsarms mit einer der Führungsachsen gekoppelt ist, und jeweils das erste Lagerende der Greifarme mit dem ersten Lagerende eines der Führungsarme und das zweite Lagerende der Führungsarme jeweils mit einer der Führungsachsen gelenkig verbunden sind, wobei jeder der Greifarme mittels eines ein erstes Lagerende und ein zweites Lagerende aufweisenden Antriebsarms mit der Antriebswelle gekoppelt ist, und das zweite Lagerende der Steuerabschnitte mit dem ersten Lagerende eines der Antriebsarme gelenkig verbunden ist und das zweite Lagerende der Antriebsarme jeweils gelenkig an der Antriebswelle gelagert ist.

Weitere Behälterklammern zum Ergreifen von Behältern sind aus den Druckschriften CN 208 898 481 U sowie DE 10 2018 104 112 A1 bekannt geworden.

Der Erfindung liegt die Aufgabe zugrunde eine Vorrichtung zum Transport von Behältern bereitzustellen, mit der Behälter mit unterschiedlichem Behälterradius entlang des gleichen Teilkreises transportiert werden können. Ferner ist es die Aufgabe der Erfindung ein entsprechendes Verfahren zum Transport von Behältern mit unterschiedlichen Behälterradien entlang eines Teilkreises vorzuschlagen.

Die Erfindung löst die Aufgabe durch eine Vorrichtung mit den Merkmalen des Anspruchs 1 und mit einem Verfahren mit den Merkmalen des Anspruchs 16. Vorteilhafte Weiterbildungen der Erfindung sind in den abhängigen Ansprüchen angegeben.

Die erfindungsgemäße Vorrichtung zum Transport von Behältern weist eine Behälterklammer mit zwei Greifarmen zum Greifen von im Querschnitt runden Behältern mit unterschiedlichen Behälterradien auf, wobei jeder Greifarm einen ersten Abschnitt mit einer ersten Anlagefläche und einen zweiten Abschnitt mit einer zweiten, konkav geformten Anlagefläche mit einem inneren und einem äußeren Anlagenflächenende aufweist, wobei die zweite Anlagefläche eine Mehrzahl von Anlageabschnitten mit unterschiedlichen Radien umfasst.

Dabei hat jeder Greifarm ein freies, äußeres Ende und ein gelagertes, inneres Ende. Am inneren Ende ist ein Drehachsenabschnitt angeordnet, zur Aufnahme und Lagerung des Greifarms an einer Drehachse. Zwischen dem Drehachsenabschnitt und dem äußeren Ende des Greifarms ist der erste Abschnitt mit der ersten Anlagefläche angeordnet und am äußeren Ende des Greifarms ist der zweite Abschnitt mit der zweiten, im Wesentlichen konkav geformten Anlagefläche angeordnet. Diese zweite Anlagefläche weist ein inneres und ein äußeres Anlagenflächenende auf, wobei diese zweite Anlagefläche eine Vielzahl von einzelnen Anlageabschnitten mit unterschiedlichen Radien umfasst, die sich jeweils an äußere Behälterkonturen anlegen können.

Zwischen einzelnen, mit Radien versehenen Anlageflächen sind vorzugsweise Übergänge vorgesehen. Werden nun Behälter mit Zwischengrößen, also solche Behälter, für deren Radius keine Anlagefläche mit demselben Radius vorgesehen ist, verarbeitet, so liegen nicht die Anlageflächen an dem Behälter an, sondern die Übergänge zwischen zwei Anlageflächen.

Der Behälter liegt an jedem Greifarm im Bereich der ersten Anlagefläche und im Bereich eines der Anlageabschnitte bzw. der entsprechenden Übergänge an. Dabei liegt der Behälter abhängig von seinem Radius an dem Anlageabschnitt oder dem Übergang an, dessen Radius dem Behälterradius am nächsten kommt, so dass sich jeder Greifarm mit dem Anlageabschnitt an die Außenseite des Behälters anschmiegt.

Die Radien, d. h. die bogenförmigen Flächen der Anlageabschnitte sind derart in Längsachsenrichtung des Greifarms positioniert und ausgebildet, dass sich in einer Greifposition die Mittellängsachse des jeweils ergriffenen Behälters, unabhängig von seinem Durchmesser, in einer Mittellage der Behälterklammer befindet, in der der Behälter mit seiner mittleren Längsachse nahezu exakt entlang des einen Teilkreises transportiert wird. Die Vorrichtung ermöglicht somit einen vorteilhaften Transport von Behältern mit unterschiedlichen Durchmessern nahezu exakt auf dem vorgegebenen Teilkreis, so dass ein störungsfreier Transport von unterschiedlichen Behältern, die jeweils voneinander abweichende Behälterradien aufweisen, mit der gleichen Behälterklammer sowohl von Transportstern zu Transportstern als auch durch eine Behälterbehandlungsvorrichtung, wie beispielsweise einem Füller oder einem Verschließer, ermöglicht wird.

In der Mittellage steht die mittlere Längsachse, d. h. die senkrecht auf dem Behälterboden stehende Längsachse, die zentral in der Behältermitte angeordnet ist, senkrecht auf dem Teilkreis. Der Teilkreis ist ein Kreisbahnabschnitt, entlang dem ein Behälter transportiert wird. Die Vorrichtung ermöglicht somit den Transport von Behältern mit unterschiedlichen Behälterradien nahezu exakt auf dem gleichen Teilkreis, ohne dass eine Umbaumaßnahme, wie beispielsweise ein Austausch der Behälterklammer, durchgeführt werden muss.

Unter der Vorrichtung zum Transport von Behältern sind bspw. Behältertransportvorrichtungen zu verstehen, die einen Behälter von Behälterbehandlungsanlagen zu Behälterbehandlungsanlagen bzw. durch einzelne Behälterbehandlungsanlagen hindurch transportieren. Die Vorrichtung zum Transport von Behältern kann insbesondere ein Transportstern sein, der einen Tragkörper aufweist und sich um eine Drehachse dreht. Am äußeren Umfang des Tragkörper sind üblicherweise eine Vielzahl von Behälterklammern nebeneinander angeordnet.

Die Behälter sind beispielsweise Behälter für Lebensmittel, insbesondere Behälter für Getränke. Die Behälter können als Dosen oder Flaschen ausgebildet sein. Dabei kann es sich beispielsweise um Behälter aus Metall oder auch Kunststoff, wie beispielsweise PET-Flaschen handeln. Auch kann es sich bei den Behältern um Flaschen handeln, die im Neckhandling transportiert werden und an ihrem Neckring oder in der Nähe von diesem ergriffen werden. Insbesondere ist die Vorrichtung zum Transport von Glasflaschen ausgebildet.

Unter unterschiedlichen Behälterradien sind Behälter mit verschiedenen Außendurchmessern in jeweils dem Bereich des Behälters zu verstehen, in dem die Behälterklammern an der Außenwand des Behälters angreifen. Der Radius des Behälters ist der senkrechte Abstand zwischen der Außenwand des Behälters und der mittleren Längsachse. Die Behälterklammern greifen üblicherweise an den Bauch- bzw. Rumpfbereich einer Flasche an. Unter runden Behältern werden Behälter verstanden, die im horizontalen Querschnitt des Greifbereichs der Behälterklammer rund oder zu mindestens weitestgehend rund ausgebildet sind.

Jede Behälterklammer weist zwei Greifarme auf, die üblicherweise jeweils um eine Drehachse schwenkbar zwischen einer Öffnungsposition und einer Greifposition gelagert sind. In der Öffnungsposition können die Behälter zwischen den beiden Greifarmen positioniert werden, in der Greifposition sind die beiden Greifarme aufeinander zu bewegt und liegen an der Außenwand des Behälters an.

Der erste Abschnitt jedes Greifarms grenzt bspw. an die Drehachse zum Verschwenken des Greifarms an. Die erste Anlagefläche ist ein sich in Längsachsenrichtung des Greifarms und sich zwischen der Drehachse und dem freien Anlagenflächenende des Greifarms erstreckender Abschnitt des Greifarms. Der zweite Abschnitt grenzt an den ersten Abschnitt, beispielsweise direkt, an. Beide Abschnitte können fließend ineinander übergehen. Dabei sind die beiden Abschnitte, insbesondere der gesamte Greifarm, bevorzugt, aber nicht zwingend, einstückig ausgebildet.

Um die Positionierung der Behälter in der Mittellage zu gewährleisten, weist der zweite Abschnitt die aus Anlageabschnitten und Übergängen konkav (sichelartig) geformte Anlagefläche auf. Im Zusammenhang mit der Anlagefläche ist unter sichelartig insbesondere eine Anlagefläche zu verstehen, die eine Bogenform aufweist.

Die Anlagefläche weist eine Vielzahl von Anlageabschnitten auf. Die Anlageabschnitte sind einzelne sich ebenfalls vom inneren zum äußeren Anlagenflächenende der zweiten Anlagefläche erstreckende Bereiche, die jeweils bogenförmig, insbesondere kreisabschnittsförmig ausgeformt sind. Dabei weist jeder Anlageabschnitt einen eigenen Radius auf, der sich von dem Radius der weiteren Anlagenabschnitte unterscheidet. Die Radien der Anlageabschnitte werden ausgehend vom inneren Anlagenflächenende zum äußeren Anlagenflächenende größer.

Die Kombination aus der sichelartig geformten Anlagefläche und der einzelnen Anlageabschnitte mit unterschiedlichen Radien gewährleistet, dass der Behälter beim Ergreifen durch die Greifarme jeweils mit dem Anlageabschnitt oder einem Übergang in Kontakt kommt, der einen Radius aufweist, der dem Behälterradius am nächsten kommt. Unter den Anlageabschnitten mit unterschiedlichen Radien sind somit entsprechende, sich in ihrem Radius unterscheidende Kreisbogenabschnitte zu verstehen. Die Radien der Anlageabschnitte beziehen sich immer auf den Abstand zwischen der senkrecht stehenden mittleren Längsachse der Behälter in der Mittellage und den Greifarm in der Greifposition, die er bei dem jeweiligen Behälterradius einnimmt. Dabei verringert sich der Abstand mit abnehmendem Behälterradius.

Die zweite Anlagefläche ist im Wesentlichen konkav gebogen und zeigt somit zur mittleren Längsachse der Behälterklammer bzw. zu dem zweiten Greifarm der Behälterklammer. Eine im horizontalen Querschnitt konkave (sichelförmige) Form des gesamten Greifarms ist jedoch nicht notwendig.

Die zweite Anlagefläche ist in ihrer Einbaulage üblicherweise senkrecht ausgerichtet, wobei sich der Radius in Längsachsenrichtung des Greifarms erstreckt. Auch die erste Anlagefläche kann in ihrer Einbaulage senkrecht ausgerichtet sein, wobei die beiden Anlageflächen üblicherweise gleichgerichtet zueinander sind.

In bevorzugter Weise weisen die Anlageabschnitte eine flächige Ausdehnung auf. D. h., die Anlageabschnitte bilden vorzugsweise jeweils eine Teilfläche der zweiten Anlagefläche.

Bei einer vorteilhaften Ausführungsform der Erfindung ist der jeweilige Anlageabschnitt flächig, insbesondere vollflächig (d.h. mit seiner gesamten Fläche), an eine äußere Behälterkontur anlegbar bzw. anschmiegbar. Mit anderen Worten, der jeweilige Anlageabschnitt kann einen flächigen Kontakt, insbesondere vollflächigen Kontakt, mit einem zu verarbeitenden bzw. zu transportierenden Behälter haben. Auf diese Weise wird - im Vergleich zu einem nur punktuellen oder linienförmigen Kontakt - ein sichereres bzw. stabileres Halten der Behälter durch die Greiferarme während des Behältertransports ermöglicht.

Gemäß der Erfindung ist vorgesehen, dass die Radien der Anlageabschnitte vom inneren Anlagenflächenende zum äußeren Anlagenflächenende größer werden.

Nach einer Weiterbildung der Erfindung ist vorgesehen, dass die Anlageabschnitte des zweiten Abschnitts direkt aneinandergrenzen, da hierdurch das Anlagern des Behälters an den Anlageabschnitt mit einem an den Behälterradius angepassten Radius besonders einfach ist. Insofern bilden die Anlageabschnitte des zweiten Abschnitts besonders bevorzugt eine wellenartig geformte Oberfläche aus. D. h., aufgrund der im Querschnitt insbesondere kreisabschnittsförmigen Ausbildung der Anlageabschnitte bilden jeweils zwei aneinandergrenzende Anlageabschnitte eine weitestgehend spitze Erhebung im Bereich des Übergangs von einem Anlageabschnitt zum angrenzenden Anlageabschnitt aus. Zwischen zwei Anlageabschnitten sind somit insbesondere auch keine Zwischenabschnitte angeordnet.

Unter einem an den Behälterradius angepassten Radius werden insbesondere Radien der Anlageabschnitte verstanden, die um höchstens +/- 2 mm, vorzugsweise um höchstens +/- 1 mm, besonders bevorzugt um höchstens +/- 0,5 mm, vom jeweiligen Behälterradius abweichen.

Jede zweite Anlagefläche weist eine Mehrzahl von Anlageabschnitten auf. Erfindungsgemäß ist vorgesehen, dass die zweite Anlagefläche mindestens drei, insbesondere vier, besonders bevorzugt mindestens fünf, vorteilhafter Weise mindestens sechs Anlageabschnitte umfasst. Hierdurch ist es möglich, eine besonders hohe Anzahl von Behältern, die jeweils zueinander unterschiedliche Behälterradien aufweisen, mit der gleichen Behälterklammer exakt entlang des eines vorgegebenen Teilkreises der Vorrichtung zu bewegen.

Jeder Anlageabschnitt erstreckt sich mit seinem Radius über eine bestimmte Strecke zwischen dem inneren und dem äußeren Anlagenflächenende. Eine besonders bevorzugte Ausführungsform der Vorrichtung sieht vor, dass die Anlageabschnitte zum äußeren Anlagenflächenende kleiner werden. Darunter ist zu verstehen, dass die direkte Strecke, über die sich jeder Anlageabschnitt erstreckt, kürzer wird. So wird insbesondere auch der jeweilige Bogenabschnitt, der den Anlageabschnitt ausbildet, in Richtung des äußeren Anlagenflächenendes größer.

Wie bereits ausgeführt, ist die zweite Anlagefläche im Querschnitt ausgehend vom inneren zum äußeren Anlagenflächenende im Wesentlichen sichelartig ausgebildet. Der Querschnitt des Greifarms an sich ist dabei nicht vorgegeben. Besonders bevorzugt verjüngt sich jedoch jeder Greifarm im Bereich des zweiten Abschnitts vom inneren zum äußeren Anlagenflächenende der zweiten Anlagefläche. D. h., jeder Greifarm wird im horizontalen Querschnitt ausgehend vom inneren Anlagenflächenende der Anlagefläche zum äußeren Anlagenflächenende der Anlagefläche dünner und kann beispielsweise im Bereich des äußeren Anlagenflächenendes spitz zusammenlaufen. Dementsprechend kann jeder Greifarm im Bereich des zweiten Abschnitts im Querschnitt konkav (sichelförmig) ausgebildet sein.

Die erste Anlagefläche kann ebenfalls eine Bogenform aufweisen, ist nach einer Weiterbildung der Erfindung jedoch gerade ausgebildet, wodurch eine besonders einfache Anlage des Behälters im Bereich des an den Behälterradius angepassten zweiten Anlageabschnitts erreicht wird. Unter gerade wird verstanden, dass sich jeweils die erste Anlagefläche jedes Greifarms im horizontalen Querschnitt linear erstreckt, d. h. keine Bogenform aufweist.

Nach einer Weiterbildung der Erfindung ist vorgesehen, dass die Greifarme in der Greifposition jeweils mit einem der Anlageabschnitte und einem Kontaktabschnitt im Bereich der ersten Anlagefläche an einem Behälter anliegen. D. h., jeder Greifarm liegt mit zwei sich in Längsachsenrichtung des Greifarms erstreckenden kurzen Abschnitten an dem Behälter an und hält diesen fest. Dabei ist jeder Greifarm besonders bevorzugt derart ausgebildet, dass der Abstand zwischen dem Anlageabschnitt und dem Kontaktabschnitt mit zunehmendem Behälterradius größer ist. Eine weitere bevorzugte Ausführungsform sieht vor, dass der Abstand zwischen dem Kontaktabschnitt im Bereich des ersten Anlageabschnitts und dem freien Anlagenflächenende des Greifarms mit zunehmendem Behälterradius größer ist. Hierdurch sind konstruktiv besonders einfache Ausbildungen der Greifarme möglich, mit denen die im Durchmesser unterschiedlichen Behälter besonders einfach so ergriffen werden können, dass alle Behälter mit ihrer mittleren Längsachse unabhängig von ihrem Behälterradius auf dem gleichen Teilkreis bewegbar sind.

Eine besonders bevorzugte Ausführungsform der Erfindung sieht vor, dass der Abstand zwischen dem Anlageabschnitt und dem freien Anlagenflächenende mit zunehmendem Behälterradius kleiner ist. D. h., umso größer der Behälterradius ist umso kleiner ist der Abstand zwischen dem Anlageabschnitt, der an dem Behälter anliegt und dem freien Anlagenflächenende des Greifarms. Auch hierdurch wird die konstruktive Ausgestaltung des Greifarms deutlich vereinfacht.

Die Anordnung der Greifarme kann unterschiedlich erfolgen. So sind beispielsweise Greifarmanordnungen bekannt, die über entsprechende Kulissenführungen unterschiedliche Bewegungen der Greifarme einer Behälterklammer zwischen der Öffnung und der Greifposition durchführen. Bei der erfinderischen Vorrichtung ist jedoch besonders bevorzugt vorgesehen, dass die Greifarme spiegelsymmetrisch zueinander angeordnet sind und insbesondere auch eine spiegelsymmetrische Bewegung zwischen der Greifstellung und der Öffnungsstellung durchführen.

Die Behälterklammer ist zudem besonders bevorzugt als aktive Behälterklammer ausgebildet, bei der die Öffnung und/oder Schließbewegung der Greifarme durch eine entsprechende Steuereinheit eingeleitet und durchgeführt wird. D. h., die Greifarme werden vorzugsweise nicht durch das Eindrücken des Behälters zwischen die beiden vorgespannten Greifarme in die Behälterklammer eingeführt.

Bei einer vorteilhaften Weiterbildung der Erfindung weist die Vorrichtung eine weitere Behälterklammer mit zwei Greifarmen auf, wobei die erstgenannte und die weitere Behälterklammern in unterschiedlichen Höhenebenen angeordnet und zum Greifen desselben Behälters ausgebildet sind. Die Greifarme der weiteren Behälterklammer sind vorzugsweise analog zu den Greifarmen der erstgenannten Behälterklammern ausgebildet. Mit anderen Worten, die weiter oben im Zusammenhang mit den Greifarmen der erstgenannten Behälterklammern erwähnten Merkmale können sich auch auf die Greifarme der weiteren Behälterklammer beziehen.

Vorzugsweise ist vorgesehen, dass die erstgenannte Behälterklammer zum Greifen einer Flasche in deren Rumpfbereich ausgebildet ist und die weitere Behälterklammern zum Greifen einer Flasche in deren Hals- oder Mündungsbereich ausgebildet ist. Dadurch kann selbst bei hoher Maschinenleistung und somit hoher Transportgeschwindigkeit ein sicherer bzw. stabiler Transport von Flaschen sichergestellt werden.

Weiter wird die, der Erfindung zugrunde liegende Aufgabe gelöst durch ein Verfahren zum Transport von runden Behältern mit unterschiedlichen Radien mittels einer Behälterklammer zum Erfassen der Behälter, mit den Schritten: Einbringen eines Behälters zwischen zwei Greifarme der Behälterklammer, Schließen der Behälterklammer zum Erfassen des Behälters durch eine Bewegung der beiden Greifarme aufeinander zu von einer Öffnungsposition in eine Greifposition, wobei jeder Greifarme eine erste Anlagefläche und eine sichelartige zweite Anlagefläche mit einem inneren Anlagenflächenende und einem äußeren Anlagenflächenende aufweist, die Anlageabschnitte mit unterschiedlichen Radien umfasst, wobei jeder erfasste Behälter beim Schließen der Behälterklammer automatisch in der Behälterklammer in einer Mittellagenposition positioniert wird, in der die Behälter weitestgehend unabhängig von ihrem Behälterradius entlang eines gleichen Teilkreises transportiert werden.

D. h., die jeweils mittleren Längsachsen der von der Behälterklammer ergriffenen Behälter sind unabhängig vom Behälterradius, lageidentisch positioniert (Mittellage) und werden insofern entlang des gleichen Teilkreises bewegt. Dabei ist anzumerken, dass die Behälterklammer üblicherweise Teil eines sich um eine Drehachse drehenden Transportsterns ist.

Die automatische Positionierung des Behälters in der Behälterklammer erfolgt insbesondere derart, dass beim Bewegen der beiden Greifarme von der Öffnungsstellung in die Schließstellung der Behälter automatisch an dem Anlageabschnitt der zweiten Anlagefläche angelegt wird, der den Behälterradius am nächsten kommt, ggf. in den für ihn am besten geeigneten Anlageabschnitt oder den entsprechenden Übergang hinein rutscht, sodass alle Behälter im Wesentlichen unabhängig von ihrem Behälterradius entlang mit ihrer senkrecht auf dem Behälterboden stehenden mittleren Längsachse entlang des gleichen Teilkreises von der Behälterklammer transportiert werden.

Die automatische Positionierung wird insbesondere durch die konkave (sichelartige) Ausformung der Anlagefläche und die Geometrie der einzelnen an der Anlagefläche angeordneten Anlageabschnitte mit den jeweils unterschiedlichen Radien erreicht.

Zur weiteren Erläuterung der einzelnen Merkmale des Verfahrens wird auf die obigen Ausführungen zur Vorrichtung verwiesen. Auch wird angemerkt, dass obwohl manche Aspekte im Zusammenhang mit einer Vorrichtung beschrieben wurden, es sich versteht, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Im Weitern wird die Erfindung anhand mehrerer Ausführungsbeispiele näher beschrieben. Es zeigen:
- Fig.1: schematisch in einem horizontalen Querschnitt einen Ausschnitt aus einer Vorrichtung mit einem Greifarm einer Behälterklammer in einer Öffnungsstellung und einer Mehrzahl von Behältern mit verschiedenen Behälterradien, die jeweils in der Mittellage positioniert dargestellt sind;
- Fig. 2: schematisch in einem horizontalen Querschnitt einen Ausschnitt aus der Vorrichtung aus Figur 1 mit dem Greifarm in einer Greifstellung an einem Behälter mit einem großen Durchmesser;
- Fig. 2a: schematisch in einem horizontalen Querschnitt zwei Ausschnitte aus der Vorrichtung aus Figur 2 mit dem Anlageabschnitt und einem Kontaktabschnitt des Greifarms jeweils in Kontakt mit dem Behälter;
- Fig. 3 bis 6: schematisch in horizontalen Querschnitten jeweils einen Ausschnitt aus der Vorrichtung aus Figur 1 und 2 mit dem Greifarm in einer Greifstellung an Behältern mit verschiedenen Durchmessern.

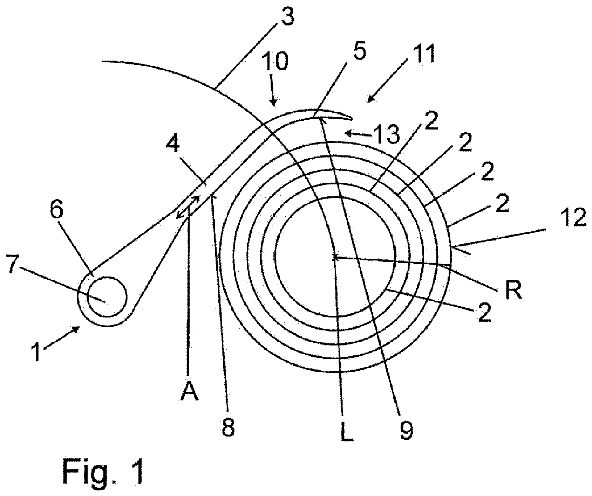

Figur 1 zeigt schematisch in einem horizontalen Querschnitt einen Ausschnitt aus einer Vorrichtung (hier nicht dargestellt) mit einem Greifarm 1, einer Behälterklammer (hier nicht dargestellt) und einer Mehrzahl von Behältern 2 mit verschiedenen Behälterradien R. Der besseren Übersicht halber sind die Behälter 2 nur mit ihrer Außenwand 12 dargestellt. Die mittleren Längsachsen L (durch ein X dargestellt) von den Behältern 2 sind positionsidentisch angeordnet, d. h. sie sind im dargestellten horizontalen Querschnitt deckungsgleich. Die Längsachsen L stehen senkrecht auf einem Teilkreis 3. Im Betrieb werden alle von der Behälterklammer erfassten Behälter 2 mit ihrer mittleren Längsachse L entlang des einen Teilkreises 3 bewegt.

Der Greifarm 1 weist einen ersten Abschnitt 4 und einen in Längsachsenrichtung A (durch einen Doppelpfeil dargestellt) des Greifarms 1 an den ersten Abschnitt 4 angrenzenden zweiten Abschnitt 5 auf. An der dem zweiten Abschnitt 5 gegenüberliegenden Seite grenzt an den ersten Abschnitt 4 ein Drehachsenabschnitt 6 mit einer Drehachse 7 an, um die der Greifarm 1 schwenkbar gelagert ist. Der Drehachsenabschnitt 6, der erste Abschnitt 4 und der zweite Abschnitt 5 sind vorzugsweise einstückig ausgebildet.

Neben dem dargestellten Greifarm 1 weist die Behälterklammer einen zweiten Greifarm (hier nicht dargestellt) auf, der spiegelsymmetrisch zu dem dargestellten Greifarm 1 ausgebildet und angeordnet ist. Beide Greifarme 1 sind über eine Steuereinheit (hier nicht dargestellt) ansteuerbar und können mittels der Steuereinheit um die jeweilige Drehachse 7 verschwenkt und in die Greifstellung aufeinander zu oder in die Öffnungsstellung voneinander wegbewegt werden. Die Behälterklammer ist wiederum Bestandteil eines um eine Drehachse (hier nicht dargestellt) drehbaren Transportsterns (hier nicht dargestellt) einer Behältertransportvorrichtung (hier nicht dargestellt).

Während der erste Abschnitt 4 gerade, hier in Längsachsenrichtung A sich linear erstreckend ausgeformt ist, weist der zweite Abschnitt 5 eine bogenförmige Form auf. Dabei ist der zweite Abschnitt 5 konkav geformt. Zudem weist der zweite Abschnitt 5 einen sichelförmigen Querschnitt auf. Am ersten Abschnitt 4 ist eine erste Anlagefläche 8 angeordnet, die ebenfalls in Längsachsenrichtung A gerade ausgebildet ist.

Am zweiten Abschnitt 5 ist eine zweite Anlagefläche 9 angeordnet, die im Querschnitt sichelartig geformt ist, wobei in Bezug auf die zweite Anlagefläche unter sichelartig nur zu verstehen ist, dass der Radius, den die sich in Längsachsenrichtung erstreckende Fläche ausbildet, ausgehend von einem inneren Anlagenflächenende 10 zu einem äußeren Anlagenflächenende 11 größer wird.

Zwischen dem inneren Anlagenflächenende 10 und dem äußeren Anlagenflächenende 11 weist die zweite Anlagefläche 9 zudem eine Mehrzahl an nebeneinander angeordneten Anlageabschnitten 13 auf. Die Anlageabschnitte 13 sind in Längsachsenrichtung A des Greifarms 1 direkt aneinandergrenzend angeordnet. Im dargestellten Querschnitt ist jeder Anlageabschnitt 13 kreisabschnittsförmig (hier nicht dargestellt) ausgebildet. D.h., jeder Anlagenabschnitt bildet im Querschnitt einen Teilkreis aus. Dabei weisen die einzelnen Anlageabschnitte 13 jeweils andere Radien auf, sodass die zweite Anlagefläche 5 aus einer Mehrzahl von einzelnen aneinandergrenzen Anlageabschnitten 13, die im Querschnitt alle jeweils als Teilkreis ausgeformt sind und jeweils unterschiedliche Radien aufweisen, ausgebildet ist.

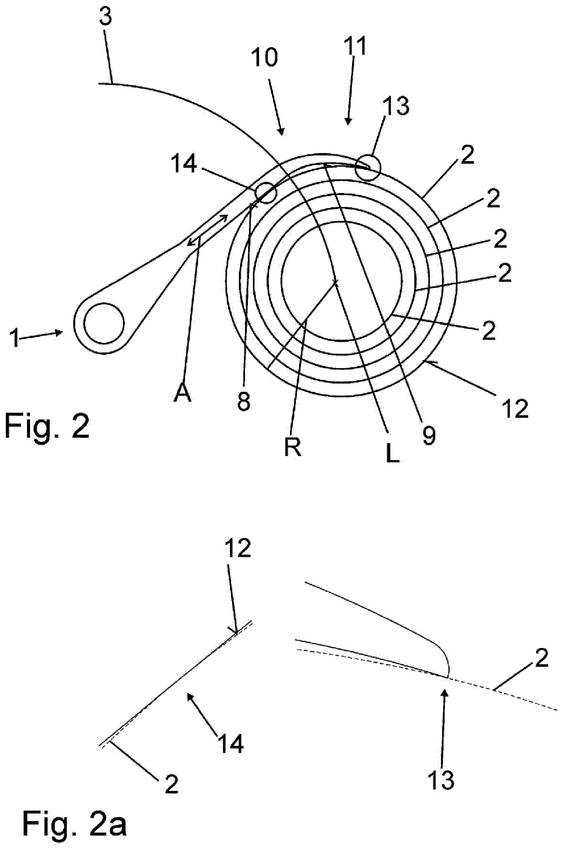

Die Radien der Anlageabschnitte sind dabei an die zu ergreifenden unterschiedlichen Behälterradien R angepasst, vorzugsweise zumindest weitestgehend gleich, sodass in der Greifposition (siehe Figur 2 bis 6) jeweils ein Anlageabschnitt 13 des Greifarms 1 an dem jeweiligen Behälter 2 angelegt ist. Aufgrund des angepassten Radius schmiegt sich der Anlageabschnitt 13, vorzugsweise vollflächig (d. h. mit der gesamten Fläche des Anlageabschnitts 13), an die Außenwand 12 des jeweiligen Behälters 2 an. Die sichelartige Ausbildung der Anlagefläche 9 in Kombination mit den bogenförmigen Anlageabschnitten 13 bewirken, dass die Behälter 2 jeweils automatisch an den Anlageabschnitt 13 des Greifarms 1 angelegt, bzw. hineingeschoben wird, dessen Radius mit dem Radius des Behälters 2 zumindest weitestgehend übereinstimmt.

Neben dem Anlageabschnitt 13 liegen die Behälter 2 zusätzlich jeweils an einem Kontaktabschnitt 14 (siehe Figur 2-6) an, der im Bereich der ersten Anlagefläche 8 vorliegt, d. h., jeder Behälter 2 weist in der Greifstellung der Greifarme 12 zwei Kontaktstellen auf, nämlich zum einen den Kontaktabschnitt 14 und zum anderen den Anlageabschnitt 13 mit jedem Greifarm 1.

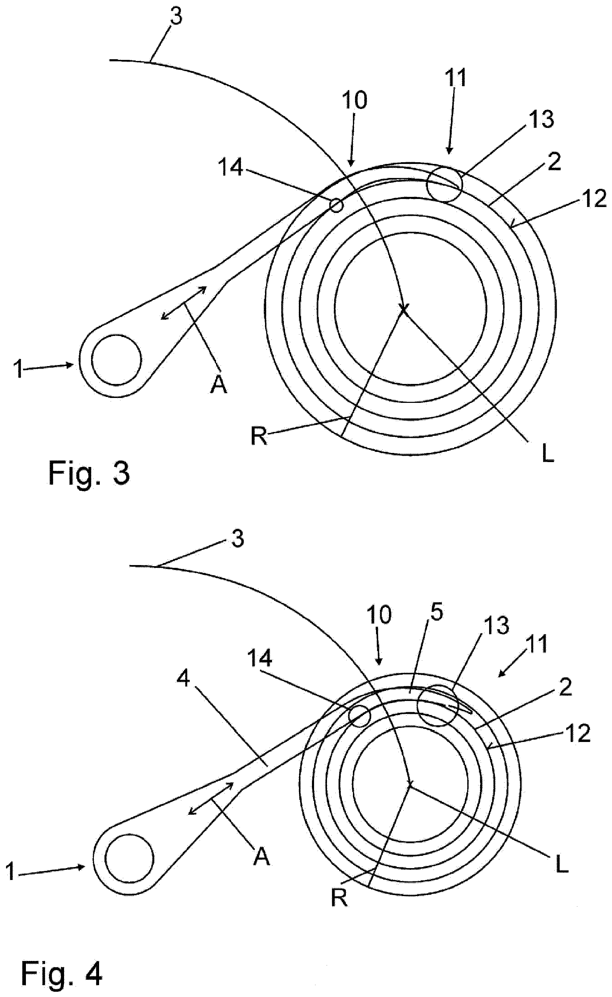

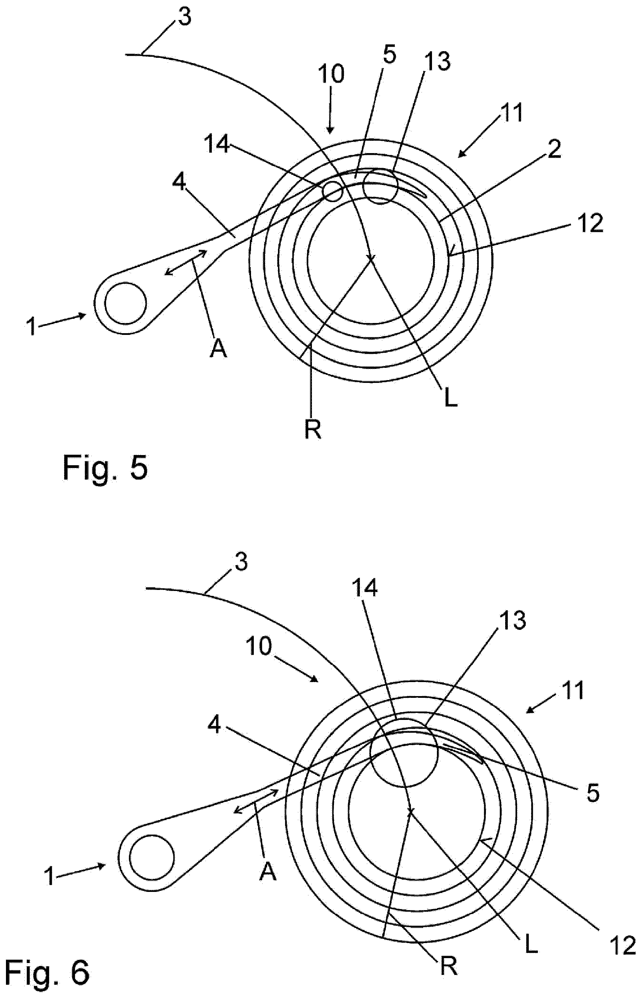

Die Figuren 2 bis 6 zeigen jeweils den Greifarm 1 in einer Greifstellung angelegt an Behälter 2 mit unterschiedlichem Radius. Deutlich erkennbar ist, dass sich der Anlagenabschnitt 13 vom äußeren Anlagenflächenende 11 der zweiten Anlagefläche 9 bei Behältern 2 mit maximalem Radius R (siehe Figur 2) mit Abnahme des Behälterradius R (siehe Figur 3-6) in Richtung des inneren Anlagenflächenendes 10 verschiebt, während sich der Kontaktabschnitt 14 mit Abnahme des Behälterradius R an der ersten Anlagefläche 8 in Richtung des äußeren Anlagenflächenendes 11 bewegt, sodass sich der Kontaktabschnitt 14 und der Anlagenabschnitt 13 mit Abnahme des Behälterradius R aufeinander zu bewegen. Dabei ist beispielsweise in Figur 6 erkennbar, dass sich der Anlageabschnitt 13 und der Kontaktabschnitt 14 überschneiden bzw. direkt ineinander übergehen.

Figur 2a stellt noch einmal detailliert den Anlageabschnitt 13 und den Kontaktabschnitt 14 der in Figur 2 dargestellten Greifstellung des Greifarms 1 dar. Deutlich erkennbar ist, dass der Kontaktabschnitt 14 gerade ausgebildet ist und sich tangential an die runde Behälteraußenwand 12 anlegt. Anzumerken ist zudem, dass der mit einem Radius ausgebildete Anlagenabschnitt 13 auch hier nur schematisch dargestellt ist, so dass auch in Figur 2a keine Radien im Bereich des zweiten Anlageabschnitts erkennbar sind.

### Bezugszeichenliste

- 1: Greifarm
- 2: Behälter
- 3: Teilkreis
- 4: erster Abschnitt
- 5: zweiter Abschnitt
- 6: Drehachsenabschnitt
- 7: Drehachse
- 8: erste Anlagefläche
- 9: zweite Anlagefläche
- 10: inneres Anlagenflächenende
- 11: äußeres Anlagenflächenende
- 12: Außenwand
- 13: Anlageabschnitt
- 14: Kontaktabschnitt

- A: Längsachsenrichtung
- R: Behälterradius

## Patentansprüche

1. Vorrichtung zum Transport von Behältern (2), umfassend eine Behälterklammer mit mindestens zwei Greifarmen (1) zum Greifen von im Querschnitt runden Behältern (2) mit unterschiedlichem Behälterradius (R), insbesondere von Getränkeflaschen und/oder Getränkedosen, wobei
- jeder Greifarm (1) ein freies, äußeres Ende und ein gelagertes, inneres Ende aufweist und am inneren Ende ein Drehachsenabschnitt (6) angeordnet ist,
- jeder Greifarm (1) zwischen dem Drehachsenabschnitt (6) und dem äußeren Ende des Greifarms (1) einen ersten Abschnitt (4) mit einer ersten Anlagefläche (8) und am äußeren Ende des Greifarms (1) einen zweiten Abschnitt (5) mit einer zweiten, konkav geformten Anlagefläche (9) mit einem inneren und einem äußeren Anlagenflächenende (10, 11) aufweist, und
- die zweite Anlagefläche (9) eine Vielzahl von Anlageabschnitten (13) mit unterschiedlichen Radien umfasst,
**dadurch gekennzeichnet, dass** die zweite Anlagefläche (9) mindestens drei Anlageabschnitte (13) aufweist und dass die Radien der Anlageabschnitte (13) vom inneren Anlagenflächenende (10) zum äußeren Anlagenflächenende (11) größer werden.

2. Vorrichtung nach Anspruch 1,
**dadurch gekennzeichnet, dass** der jeweilige Anlageabschnitt (13) flächig, insbesondere vollflächig, an eine äußere Behälterkontur anlegbar ist.

3. Vorrichtung nach einem der vorhergehenden Ansprüche,
**dadurch gekennzeichnet, dass** die Anlageabschnitte (13) direkt aneinandergrenzen.

4. Vorrichtung nach einem der vorhergehenden Ansprüche,
**dadurch gekennzeichnet, dass** die Anlageabschnitte (13) eine wellenartige zweite Anlagefläche (9) ausbilden.

5. Vorrichtung nach einem der vorhergehenden Ansprüche,
**dadurch gekennzeichnet, dass** die Anlageabschnitte (13) in Längsachsenrichtung (A) des Greifarms (1) zum äußeren Anlagenflächenende (11) größer werden.

6. Vorrichtung nach einem der vorhergehenden Ansprüche,
**dadurch gekennzeichnet, dass** die Radien der Anlageabschnitte (13) der zweiten Anlagefläche (9) jeweils dem Radius eines zu verarbeitenden Behälters (2) entsprechen.

7. Vorrichtung nach einem der vorhergehenden Ansprüche,
**dadurch gekennzeichnet, dass** die Radien der Anlageabschnitte (13) 47 mm, 41,37 mm, 35,75 mm und 30,12 mm betragen.

8. Vorrichtung nach einem der vorhergehenden Ansprüche,
**dadurch gekennzeichnet, dass** die Greifarme (1) im Bereich des zweiten Abschnitts (9) zum äußeren Anlagenflächenende (11) der Anlageflächen (8, 9) verjüngend ausgebildet sind.

9. Vorrichtung nach einem der vorhergehenden Ansprüche,
**dadurch gekennzeichnet, dass** die erste Anlagefläche (8) gerade ausgebildet ist.

10. Vorrichtung nach einem der vorhergehenden Ansprüche,
**dadurch gekennzeichnet, dass** die Greifarme (1) in einer Greifposition jeweils mit einem der Anlageabschnitte (13) und einem Kontaktabschnitt (14) im Bereich der ersten Anlagefläche (8) an einem Behälter (2) anliegen.

11. Vorrichtung nach Anspruch 10,
**dadurch gekennzeichnet, dass** der Abstand zwischen dem Anlageabschnitt (13) und dem Kontaktabschnitt (14) mit zunehmendem Behälterradius (R) größer ist.

12. Vorrichtung nach Anspruch 10 oder 11,
**dadurch gekennzeichnet, dass** der Abstand zwischen dem Kontaktabschnitt (14) und dem äußeren Anlagenflächenende (11) mit zunehmendem Behälterradius (R) größer ist.

13. Vorrichtung nach einem der vorhergehenden Ansprüche,
**dadurch gekennzeichnet, dass** der Abstand zwischen dem Anlageabschnitt (13) und dem äußeren Anlagenflächenende (11) mit zunehmendem Behälterradius (R) kleiner ist.

14. Vorrichtung nach einem der vorhergehenden Ansprüche,
**dadurch gekennzeichnet, dass** die Greifarme (1) spiegelsymmetrisch angeordnet sind.

15. Vorrichtung nach einem der vorhergehenden Ansprüche,
**gekennzeichnet durch** eine weitere Behälterklammer mit zwei Greifarmen (1), wobei die erstgenannte und die weitere Behälterklammer in unterschiedlichen Höhenebenen angeordnet und zum Greifen desselben Behälters (2) ausgebildet sind.

16. Verfahren zum Transport von im Querschnitt runden Behältern (2) mit unterschiedlichen Radien (R) mittels einer Behälterklammer zum Erfassen der Behälter (2) mit den Schritten:
- Einbringen eines Behälters (2) zwischen zwei Greifarmen (1) der Behälterklammer,
- Schließen der Behälterklammer zum Erfassen des Behälters (2) durch eine Bewegung der beiden Greifarme (1) aufeinander zu von einer Öffnungsposition in eine Greifposition,
wobei
- jeder Greifarm (1) eine erste Anlagefläche (8) und eine konkave zweite Anlagefläche (9) mit einem inneren Anlagenflächenende (10) und einem äußeren Anlagenflächenende (11) aufweist, die Anlageabschnitte (13) mit unterschiedlichen Radien umfasst, wobei jeder erfasste Behälter (2) beim Schließen der Behälterklammer automatisch in der Behälterklammer in eine Mittellagenposition oder in einer nahezu exakten Mittellagenposition positioniert wird, in der die Behälter (2) unabhängig von ihrem Behälterradius (R) entlang eines gleichen Teilkreises (3) transportiert werden,
**dadurch gekennzeichnet, dass** zur Durchführung des Verfahrens eine Vorrichtung zum Transport von Behältern (2) gemäß einem der vorherigen Ansprüche 1 bis 15 verwendet wird.

## Claims

1. Device for transporting containers (2), comprising a container clamp having at least two gripping arms (1) for gripping containers (2) which have a round cross-section and different container radii (R), in particular drinks bottles and/or drinks cans, wherein
- each gripping arm (1) has a free outer end and an inner end supported on bearings, and a axis of rotation portion (6) is arranged on the inner end,
- each gripping arm (1) between the axis of rotation portion (6) and the outer end of the gripping arm (1) has a first portion (4) with a first contact surface (8) and on the outer end of the gripping arm (1) has a second portion (5) with a second, concave contact surface (9) with an inner and an outer contact surface end (10, 11), and
- the second contact surface (9) comprises a plurality of contact portions (13) having different radii,
**characterised in that** the second contact surface (9) has at least three contact portions (13) and that the radii of the contact portions (13) increase in size from the inner contact surface end (10) to the outer contact surface end (11).

2. Device according to claim 1,
**characterised in that** the particular contact portion (13) can be placed flat against, in particular over its entire surface against, an outer container contour.

3. Device according to one of the previous claims,
**characterised in that** the contact portions (13) are directly contiguous.

4. Device according to one of the previous claims,
**characterised in that** the contact portions (13) form an undulating second contact surface (9).

5. Device according to one of the previous claims,
**characterised in that** the contact portions (13) increase in size in the direction of the longitudinal axis (A) of the gripping arm (1) to the outer contact surface end (11).

6. Device according to one of the previous claims,
**characterised in that** the radii of the contact portions (13) of the second contact surface (9) correspond in each case to the radius of a container (2) to be processed.

7. Device according to one of the previous claims,
**characterised in that** the radii of the contact portions (13) are 47 mm, 41.37 mm, 35.75 mm and 30.12 mm.

8. Device according to one of the previous claims,
**characterised in that** the gripping arms (1) in the area of the second portion (9) are configured such that they taper to the outer contact surface end (11) of the contact surfaces (8, 9).

9. Device according to one of the previous claims,
**characterised in that** the first contact surface (8) is configured such that it is straight.

10. Device according to one of the previous claims,
**characterised in that** the gripping arms (1), in a gripping position, are in contact with a container (2) in each case with one of the contact portions (13) and one contact section (14) in the area of the first contact surface (8).

11. Device according to claim 10,
**characterised in that** the distance between the contact portion (13) and the contact section (14) is greater with increasing container radius (R).

12. Device according to claim 10 or 11,
**characterised in that** the distance between the contact section (14) and the outer contact surface end (11) is greater with increasing container radius (R).

13. Device according to one of the previous claims,
**characterised in that** the distance between the contact portion (13) and the outer contact surface end (11) is smaller with increasing container radius (R).

14. Device according to one of the previous claims,
**characterised in that** the gripping arms (1) are arranged to be mirror symmetrical.

15. Device according to to one of the previous claims,
**characterised by** a further container clamp with two gripping arms (1), wherein the first-mentioned and the further container clamps are arranged at different height levels and are configured to grip these same containers (2).

16. Method for transporting containers (2) which have a round cross-section but with different radii (R) by means of a container clamp to grasp the containers (2) with the steps:
- introduction of a container (2) between two gripping arms (1) of the container clamp,
- closure of the container clamp to grasp the containers (2) by a movement of both gripping arms (1) consecutively from an open position into a gripping position,
wherein
- each gripping arm (1) has a first contact surface (8) and a concave second contact surface (9) with an inner contact surface end (10) and an outer contact surface end (11), which comprises contact portions (13) with different radii, wherein each gripped container (2), upon closing the container clamp, is automatically positioned in the container clamp in a central position or in an almost exact central position, in which the containers (2) are transported, regardless of their container radius (R), along an identical circular segment (3),
**characterised in that** to carry out the method, a device for transporting containers (2) according to one of the previous claims 1 to 15 is used.

## Revendications

1. Dispositif de transport de contenants (2), comprenant une pince à contenant avec au moins deux bras de préhension (1) pour saisir des contenants (2) de section ronde avec un rayon de contenant (R) différent, en particulier des bouteilles à boisson et/ou des boîtes à boisson, dans lequel
- chaque bras de préhension (1) présente une extrémité extérieure libre et une extrémité intérieure sur palier et une section d'axe de rotation (6) est disposée à l'extrémité intérieure,
- chaque bras de préhension (1) présente entre la section d'axe de rotation (6) et l'extrémité extérieure du bras de préhension (1) une première section (4) avec une première surface d'appui (8) et à l'extrémité extérieure du bras de préhension (1) une seconde section (5) avec une seconde surface d'appui (9) de forme concave avec une extrémité intérieure et une extrémité extérieure de surface d'appui (10, 11), et
- la seconde surface d'appui (9) comprend une pluralité de sections d'appui (13) avec des rayons différents,
**caractérisé en ce que** la seconde surface d'appui (9) présente au moins trois sections d'appui (13) et que les rayons des sections d'appui (13) deviennent plus grands à partir de l'extrémité intérieure de surface d'appui (10) vers l'extrémité extérieure de surface d'appui (11).

2. Dispositif selon la revendication 1,
**caractérisé en ce que** la section d'appui (13) respective peut être appliquée à plat, en particulier sur toute sa surface, contre un contour extérieur de contenant.

3. Dispositif selon l'une quelconque des revendications précédentes,
**caractérisé en ce que** les sections d'appui (13) sont directement adjacentes les unes aux autres.

4. Dispositif selon l'une quelconque des revendications précédentes,
**caractérisé en ce que** les sections d'appui (13) réalisent une seconde surface d'appui (9) ondulée.

5. Dispositif selon l'une quelconque des revendications précédentes,
**caractérisé en ce que** les sections d'appui (13) deviennent plus grandes dans la direction d'axe longitudinal (A) du bras de préhension (1) vers l'extrémité extérieure de surface d'appui (11).

6. Dispositif selon l'une quelconque des revendications précédentes,
**caractérisé en ce que** les rayons des sections d'appui (13) de la seconde surface d'appui (9) correspondent respectivement au rayon d'un contenant (2) à traiter.

7. Dispositif selon l'une quelconque des revendications précédentes,
**caractérisé en ce que** les rayons des sections d'appui (13) sont de 47 mm, 41,37 mm, 35,75 mm et 30,12 mm.

8. Dispositif selon l'une quelconque des revendications précédentes,
**caractérisé en ce que** les bras de préhension (1) dans la zone de la seconde section (9) sont réalisés de manière à s'amincir vers l'extrémité extérieure de surface d'appui (11) des surfaces d'appui (8, 9).

9. Dispositif selon l'une quelconque des revendications précédentes,
**caractérisé en ce que** la première surface d'appui (8) est réalisée de manière droite.

10. Dispositif selon l'une quelconque des revendications précédentes,
**caractérisé en ce que** les bras de préhension (1) dans une position de préhension s'appliquent sur un contenant (2) dans la zone de la première surface d'appui (8) respectivement avec l'une des sections d'appui (13) et une section de contact (14).

11. Dispositif selon la revendication 10,
**caractérisé en ce que** la distance entre la section d'appui (13) et la section de contact (14) croît à mesure que le rayon de contenant (R) augmente.

12. Dispositif selon la revendication 10 ou 11,
**caractérisé en ce que** la distance entre la section de contact (14) et l'extrémité extérieure de surface d'appui (11) croît à mesure que le rayon de contenant (R) augmente.

13. Dispositif selon l'une quelconque des revendications précédentes,
**caractérisé en ce que** la distance entre la section d'appui (13) et l'extrémité extérieure de surface d'appui (11) décroît à mesure que le rayon de contenant (R) augmente.

14. Dispositif selon l'une quelconque des revendications précédentes,
**caractérisé en ce que** les bras de préhension (1) sont disposés symétriquement en miroir.

15. Dispositif selon l'une quelconque des revendications précédentes,
**caractérisé par** une autre pince à contenant avec deux bras de préhension (1), dans lequel la première pince citée et l'autre pince à contenant sont disposées à différents niveaux de hauteur et réalisées pour saisir le même contenant (2).

16. Procédé de transport de contenants (2) de section ronde avec des rayons différents (R) à l'aide d'une pince à contenant pour saisir les contenants (2) avec les étapes :
- d'introduction d'un contenant (2) entre deux bras de préhension (1) de la pince à contenant,
- de fermeture de la pince à contenant pour saisir le contenant (2) par un mouvement des deux bras de préhension (1) l'un vers l'autre à partir d'une position d'ouverture dans une position de préhension,
dans lequel
- chaque bras de préhension (1) présente une première surface d'appui (8) et une seconde surface d'appui (9) concave avec une extrémité intérieure de surface d'appui (10) et une extrémité extérieure de surface d'appui (11), qui comprend des sections d'appui (13) avec des rayons différents, dans lequel chaque contenant (2) saisi est positionné automatiquement dans la pince à contenant lors de la fermeture de la pince à contenant dans une position de situation centrale ou dans une position de situation centrale presque exacte dans laquelle les contenants (2) sont transportés indépendamment de leur rayon de contenant (R) le long d'un même cercle partiel (3),
**caractérisé en ce qu'**un dispositif de transport de contenants (2) selon l'une quelconque des revendications 1 à 15 précédentes est utilisé pour mettre en œuvre le procédé.
